# EUROPEAN PATENT APPLICATION

(11) **EP 4 624 780 A1**
(43) Date of publication of application: **01.10.2025**
(21) Application number: 25165718.5
(22) Date of filing: 24.03.2025
(51) Int. Cl.: F16H 37/08, F16H 57/04, B60K 7/00, B60K 1/00, F16H 57/021

(54) **VEHICLE DRIVE DEVICE**

(30) Priority: 28.03.2024 JP 2024054314
(71) Applicant: Aisin Corporation, Kariya, Aichi 448-8650 (JP)
(72) Inventor: HATTORI, Nakatsune, Kariya 448-8650 (JP); KITAGAWA, Rei, Kariya 448-8650 (JP); HANAI, Takayoshi, Kariya 448-8650 (JP); KANIE, Kenji, Kariya 448-8650 (JP)
(74) Representative: Winter, Brandl - Partnerschaft mbB

(57) **Abstract**

A vehicle drive device (100) includes an output member (21, 22) drivingly coupled to a wheel (W1, W2), a rotary electric machine (1) including a rotor (10), a power transmission mechanism (3) that transmits power between the rotor (10) and the output member (21, 22), and a case (9) including an accommodation chamber (R1, R2) that accommodates the rotary electric machine (1) and the power transmission mechanism (3), the power transmission mechanism (3) including a plurality of rotation shafts (41 to 44) and gears (51 to 56) disposed on the respective rotation shafts (41 to 44), wherein the vehicle drive device (100) includes a support member (7) that is disposed in the accommodation chamber (R1, R2), is fixed to the case (9), and supports the plurality of rotation shafts (41 to 44) included in the power transmission mechanism (3), and a catch tank (70) that stores oil scraped up by at least any of the gears (51 to 56) included in the power transmission mechanism (3), wherein the catch tank (70) is formed including the support member (7) without being combined with the case (9).

## Description

### TECHNICAL FIELD

The present disclosure relates to a vehicle drive device including a rotary electric machine, a power transmission mechanism that transmits power between a rotor of the rotary electric machine and an output member drivingly coupled to wheels, and a case that accommodates the rotary electric machine and the power transmission mechanism.

### BACKGROUND DISCUSSION

An example of the vehicle drive device as described above is disclosed in JP 2016-121733. Hereinafter, reference numerals in parentheses in the description of the background discussion are those in JP 2016-121733 A. A vehicle drive device disclosed in JP 2016-121733 A includes an electric motor (11), a power transmission mechanism that transmits power between a rotor (11a) of the electric motor (11) and a rear-wheel axle (18) drivingly coupled to a rear wheel (31), and a transaxle case (20) that accommodates the electric motor (11) and the power transmission mechanism. The transaxle case (20) includes a first division case portion (20a), a second division case portion (20b), and a partition member (20d) sandwiched between the two division case portions (20a, 20b). The partition member (20d) includes a bearing portion (50) that supports a bearing of a gear included in the power transmission mechanism. A second catch tank (35) that stores lubricant scraped up by a final driven gear (26) included in the power transmission mechanism is formed of the second division case portion (20b) and the partition member (20d) joined to each other.

As described above, in the vehicle drive device of JP 2016-121733, the catch tank that stores the oil scraped up by the gear included in the power transmission mechanism is formed of the support member (the partition member in JP 2016-121733 A) that supports the rotation shaft included in the power transmission mechanism and the other member (the second division case portion in JP 2016-121733 A) to which the support member is joined. Therefore, in the technique described in JP 2016-121733 A, it is necessary to assemble the support member to the case so that the oil does not leak from the joint portion between these two members, and the assembling work of the support member may be complicated.

Therefore, in a case where the catch tank is formed including the support member that supports the rotation shaft included in the power transmission mechanism, it is desired to realize a technique that facilitates the assembling work of the support member to the case.

### SUMMARY

A vehicle drive device according to the present disclosure includes an output member drivingly coupled to a wheel, a rotary electric machine including a rotor, a power transmission mechanism that transmits power between the rotor and the output member, and a case including an accommodation chamber that accommodates the rotary electric machine and the power transmission mechanism, the power transmission mechanism including a plurality of rotation shafts, and a gear disposed on each of the rotation shafts, wherein the vehicle drive device includes a support member that is disposed in the accommodation chamber and is fixed to the case, and supports the plurality of rotation shafts included in the power transmission mechanism, and a catch tank that stores oil scraped up by at least any of the gears included in the power transmission mechanism, and wherein the catch tank is formed including the support member without being combined with the case.

According to this configuration, the catch tank can be formed including the support member such that the joint portion between the support member and the case does not exist in the catch tank. Therefore, leakage of oil from a joint portion between the support member and the case hardly causes a problem, and assembling work of the support member to the case is easily facilitated as compared with a case where the catch tank is formed by the support member and the case.

Further features and advantages of the vehicle drive device will be clarified from the following description of the embodiment described with reference to the drawings.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view along an axial direction of a vehicle drive device according to the embodiment;
Fig. 2 is a perspective view of a support member according to the embodiment;
Fig. 3 is a perspective view of the support member according to the embodiment when viewed from a direction different from that in Fig. 2;
Fig. 4 is a perspective view of the catch tank according to the embodiment;
Fig. 5 is a perspective view of the catch tank according to the embodiment when viewed from a direction different from that in Fig. 4;
Fig. 6 is a cross-sectional view orthogonal to the axial direction of the vehicle drive device according to the embodiment; and
Fig. 7 is a cross-sectional view orthogonal to the axial direction of part of the vehicle drive device according to the embodiment.

### DETAILED DESCRIPTION

An embodiment of a vehicle drive device will be described with reference to the drawings.

In the present specification, "drivingly coupled" refers to a state in which two rotation elements are coupled so as to be able to transmit a driving force, and includes a state in which the two rotation elements are coupled so as to rotate integrally or a state in which the two rotation elements are coupled so as to be able to transmit a driving force via one or two or more transmission members. Examples of such a transmission member include various members that transmit rotation at the same speed or at a variable speed, such as a shaft, a gear mechanism, a belt, and a chain. As the transmission member, an engagement device that selectively transmits a rotation and a driving force, for example, a friction engagement device, a meshing engagement device, or the like may be included.

In the present specification, the "rotary electric machine" is used as a concept including any of a motor (electric motor), a generator, and a motor-generator that performs both functions of the motor and the generator as necessary. Furthermore, in the present specification, regarding the arrangement of two elements, "overlapping when viewed in a specific direction" means that when a virtual straight line parallel to the line-of-sight direction is moved in a direction orthogonal to the virtual straight line, a region where the virtual straight line intersects both of the two elements at least partially exists.

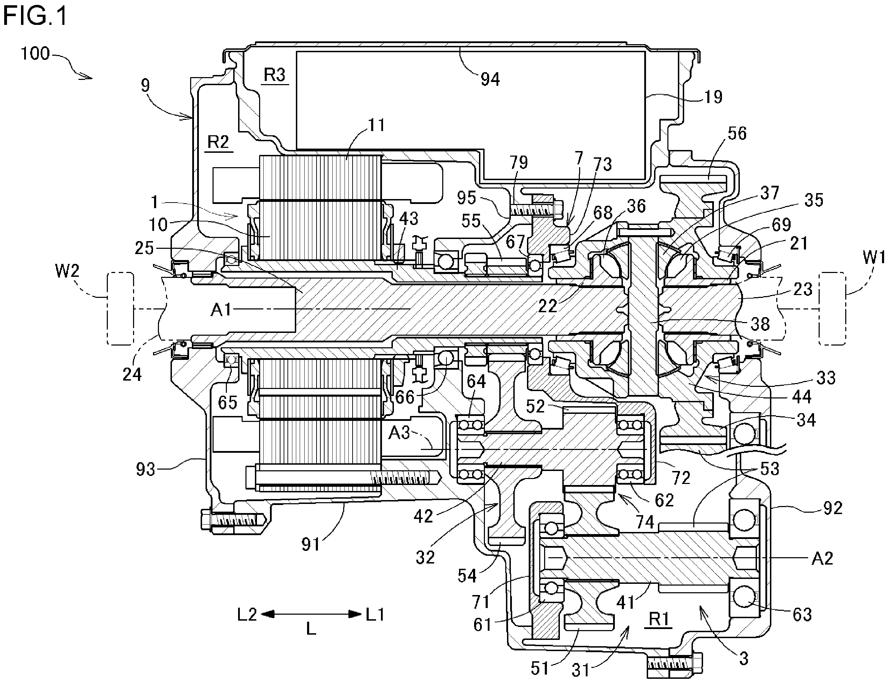

As illustrated in Fig. 1, a vehicle drive device 100 includes an output member (21, 22) drivingly coupled to a wheel (W1, W2), a rotary electric machine 1 including a rotor 10, a power transmission mechanism 3 that transmits power between the rotor 10 and the output member (21, 22), and a case 9. In the present embodiment, the vehicle drive device 100 includes, as the output member, a first output member 21 drivingly coupled to a first wheel W1 which is a first wheel, and a second output member 22 drivingly coupled to a second wheel W2 which is a second wheel. The power transmission mechanism 3 transmits power between the rotor 10 and the pair of output members (the first output member 21 and the second output member 22). The first wheel W1 and the second wheel W2 are a pair of left and right wheels in a vehicle on which the vehicle drive device 100 is mounted.

The vehicle drive device 100 transmits the driving force of the rotary electric machine 1 to the wheels (W1, W2) to cause the vehicle on which the vehicle drive device 100 is mounted to travel. The rotary electric machine 1 is electrically connected to a power storage device such as a battery or a capacitor via an inverter 19 that drives the rotary electric machine 1. The rotary electric machine 1 generates a driving force by powering with electric power stored in the power storage device. In addition, the rotary electric machine 1 performs power generation by the driving force transmitted from the wheel W to charge the power storage device. A vehicle on which the vehicle drive device 100 is mounted may be provided with a driving force source (for example, an internal combustion engine) different from the rotary electric machine 1, and the vehicle drive device 100 may transmit the driving force of the rotary electric machine 1 and the driving force source to wheels (W1, W2).

The rotary electric machine 1 includes the rotor 10 and a stator 11. The stator 11 is fixed to the case 9 (specifically, a first case portion 91 to be described later). In the present embodiment, the rotary electric machine 1 is an inner rotor type rotary electric machine, and the rotor 10 is disposed inside the stator 11 in the radial direction (a direction orthogonal to a first axis A1 described later). In the radial direction orthogonal to the axis, the "inner side" means a side approaching the axis, and the "outer side" means a side opposite the side (that is, the side away from the axis). In the present embodiment, the rotary electric machine 1 is a rotary field type rotary electric machine, a permanent magnet is provided on the rotor 10, and a coil is wound around the stator 11.

Here, a rotation axis of the rotor 10 is referred to as the "first axis A1", a direction along the first axis A1 is referred to as an "axial direction L", one side of the axial direction L is referred to as an "axial direction first side L1", and the other side in the axial direction L is referred to as an "axial direction second side L2". In a vehicle mounting state in which the vehicle drive device 100 is mounted on the vehicle, a direction along the vertical direction is referred to as a "vertical direction V", an upper side of the vertical direction is referred to as an "upper side V1", and a lower side of the vertical direction is referred to as a "lower side V2". In addition, a direction orthogonal to the axial direction L and the vertical direction V is referred to as a "width direction X", one side of the width direction X is referred to as a "width direction first side X1", and the other side of the width direction X is referred to as a "width direction second side X2". In the present embodiment, the vehicle drive device 100 is mounted on the vehicle in a direction in which the axial direction L is along the left-right direction of the vehicle. Therefore, the width direction X is a direction along the vehicle front-rear direction in the vehicle mounting state.

The rotor 10 of the rotary electric machine 1 is coupled to a third rotation shaft 43 so as to rotate integrally with the third rotation shaft 43. The third rotation shaft 43 is a rotation shaft that rotates about the first axis A1 as a rotation axis. The third rotation shaft 43 is provided with a fifth gear 55 that rotates integrally with the third rotation shaft 43. The fifth gear 55 is disposed between the rotor 10 and a differential gear mechanism 33 described later in the axial direction L. In the present embodiment, the fifth gear 55 is a member different from the third rotation shaft 43, and is coupled (here, spline coupling) to the third rotation shaft 43 so as to rotate integrally with the third rotation shaft 43. In the present specification, a member that rotates about a rotation axis is referred to as a "rotation shaft", and the "rotation shaft" is not limited to a specific shape. Therefore, the "rotation shaft" includes not only a tubular member such as the third rotation shaft 43 and a cylindrical member such as a first rotation shaft 41 and a second rotation shaft 42 described later but also a hollow case-shaped member such as a fourth rotation shaft 44 described later.

In the present embodiment, the power transmission mechanism 3 includes the differential gear mechanism 33. The differential gear mechanism 33 is disposed on the axial direction first side L1 relative to the rotary electric machine 1. The differential gear mechanism 33 includes a differential input member 34. In the present embodiment, the differential input member 34 is provided with a sixth gear 56 that rotates integrally with the differential input member 34. The sixth gear 56 is disposed on the axial direction first side L1 relative to a pinion shaft 38 to be described later. The differential gear mechanism 33 distributes the rotation transmitted to the differential input member 34 to the first output member 21 and the second output member 22. In the present embodiment, the differential gear mechanism 33 is a bevel gear type differential gear mechanism, and includes the fourth rotation shaft 44**,** a first side gear 35, a second side gear 36, a pinion gear 37, and the pinion shaft 38. The fourth rotation shaft 44 is a rotation shaft that rotates about the first axis A1 as a rotation axis. The fourth rotation shaft 44 is disposed on the axial direction first side L1 relative to the third rotation shaft 43. The differential input member 34 is coupled to the fourth rotation shaft 44 so as to rotate integrally with the fourth rotation shaft 44.

The fourth rotation shaft 44 constitutes a differential case, and accommodates the first side gear 35, the second side gear 36, and the pinion gear 37. The pinion gear 37 is supported by the pinion shaft 38 that rotates integrally with the fourth rotation shaft 44, rotates (rotate on its axis) about the pinion shaft 38 as a rotation axis, and rotates (revolve) about the first axis A1 as a rotation axis. The first side gear 35 and the second side gear 36 mesh with the pinion gear 37 and rotate about the first axis A1 as a rotation axis. The first side gear 35 is disposed on the axial direction first side L1 relative to the pinion shaft 38, and the second side gear 36 is disposed on the axial direction second side L2 relative to the pinion shaft 38.

The first side gear 35 is coupled to the first output member 21 so as to rotate integrally with the first output member 21, and the second side gear 36 is coupled to the second output member 22 so as to rotate integrally with the second output member 22. The differential gear mechanism 33 distributes the rotation transmitted to the differential input member 34 to the first side gear 35 and the second side gear 36, thereby distributing the rotation transmitted to the differential input member 34 to the first output member 21 and the second output member 22. In the present embodiment, the first output member 21 is a member (here, a tubular member extending in the axial direction L) formed integrally with the first side gear 35, and the second output member 22 is a member (here, a tubular member extending in the axial direction L) formed integrally with the second side gear 36.

The vehicle on which the vehicle drive device 100 is mounted is provided with a first drive shaft 23 drivingly coupled to the first wheel W1 and a second drive shaft 24 drivingly coupled to the second wheel W2. The drive shaft (23, 24) is coupled to the wheel (W1, W2) via, for example, a constant velocity joint. The first output member 21 is coupled to the first drive shaft 23 so as to rotate integrally with the first drive shaft 23, and the second output member 22 is coupled to the second drive shaft 24 so as to rotate integrally with the second drive shaft 24. In the example illustrated in Fig. 1, the second output member 22 is coupled to the second drive shaft 24 via a transmission shaft 25 extending along the axial direction L on the inner side of the radial direction (direction orthogonal to the first axis A1) with respect to the third rotation shaft 43.

In the present embodiment, the power transmission mechanism 3 includes a first counter gear mechanism 31 and a second counter gear mechanism 32. The first counter gear mechanism 31 and the second counter gear mechanism 32 are disposed on the axial direction first side L1 relative to the rotary electric machine 1. The first counter gear mechanism 31 and the second counter gear mechanism 32 are disposed in a power transmission path between the rotor 10 and the differential gear mechanism 33. In the present embodiment, the first counter gear mechanism 31 is disposed in the power transmission path between the second counter gear mechanism 32 and the differential gear mechanism 33. That is, of the two counter gear mechanisms (31, 32) disposed in the power transmission path between the rotor 10 and the differential gear mechanism 33, the first counter gear mechanism 31 is disposed closer to the differential gear mechanism 33 in the power transmission path. In the present embodiment, the first counter gear mechanism 31 corresponds to a "counter gear mechanism".

The counter gear mechanism (31, 32) is disposed at an axis different from any of the rotation axis of the rotor 10 and the rotation axis of the differential input member 34. In the present embodiment, the differential input member 34 is disposed at the first axis A1 as in the rotor 10, and the rotation axis of the rotor 10 and the rotation axis of the differential input member 34 are both the first axis A1. The first counter gear mechanism 31 is disposed at a second axis A2 different from the first axis A1, and the second counter gear mechanism 32 is disposed at a third axis A3 different from any of the first axis A1 and the second axis A2. The first axis A1, the second axis A2, and the third axis A3 are parallel to each other. In the present embodiment, the second axis A2 corresponds to an "axis different from any of the rotation axis of the rotor and the rotation axis of the differential input member".

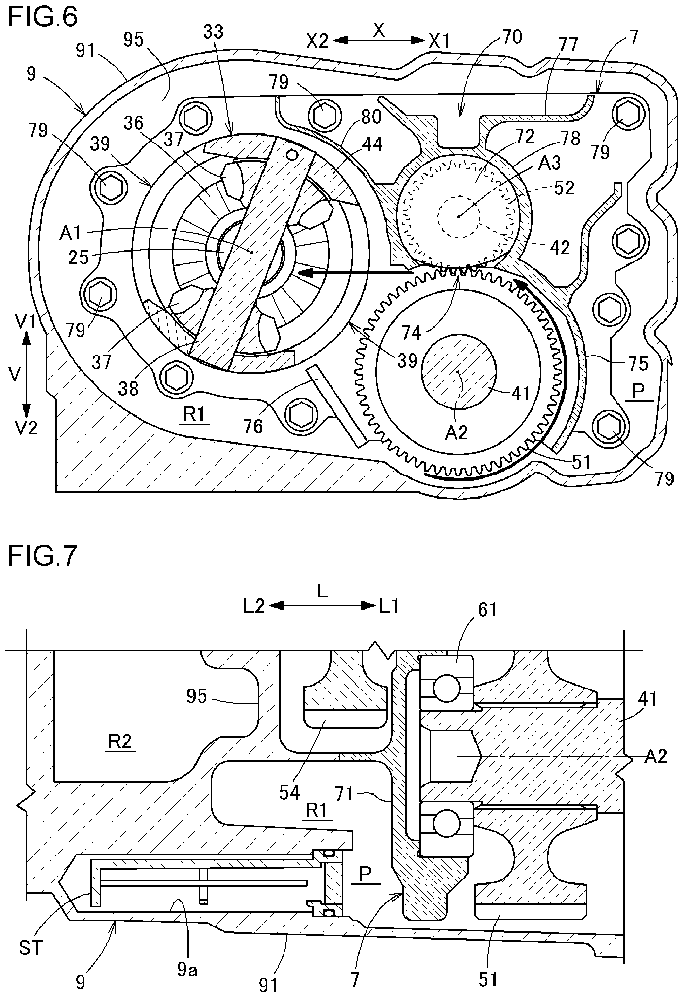

In the present embodiment, the three axes (A1 to A3) are disposed as illustrated in Fig. 6. That is, the second axis A2 and the third axis A3 are disposed on the width direction first side X1 relative to the first axis A1. The second axis A2 is disposed on the lower side V2 relative to the third axis A3. Here, the second axis A2 is disposed on the lower side V2 relative to the first axis A1, and the third axis A3 is disposed on the upper side V1 relative to the first axis A1.

The first counter gear mechanism 31 includes a first gear 51 and a third gear 53 that are a pair of gears, and the first rotation shaft 41 that couples the pair of gears (51 and 53). In the present embodiment, the first gear 51 is a member different from the first rotation shaft 41, and the third gear 53 is formed integrally with the first rotation shaft 41. The first gear 51 is coupled (here, spline coupling) to the first rotation shaft 41 so as to rotate integrally with the first rotation shaft 41. In the present embodiment, the third gear 53 is formed to have a smaller diameter than the first gear 51. In the present embodiment, the third gear 53 is disposed on the axial direction first side L1 relative to the first gear 51. In the present embodiment, the first gear 51 and the third gear 53 correspond to a "pair of gears", and the first rotation shaft 41 corresponds to a "coupling shaft as a rotation shaft that couples the pair of gears".

The second counter gear mechanism 32 includes a second gear 52 and a fourth gear 54 that are a pair of gears, and the second rotation shaft 42 that couples the pair of gears (52 and 54). In the present embodiment, the second gear 52 is formed integrally with the second rotation shaft 42, and the fourth gear 54 is a member different from the second rotation shaft 42. The fourth gear 54 is coupled (here, spline coupling) to the second rotation shaft 42 so as to rotate integrally with the second rotation shaft 42. In the present embodiment, the fourth gear 54 is formed to have a larger diameter than the second gear 52. In the present embodiment, the fourth gear 54 is disposed on the axial direction second side L2 relative to the second gear 52.

The first gear 51 meshes with the second gear 52, the third gear 53 meshes with the sixth gear 56, and the fourth gear 54 meshes with the fifth gear 55. Therefore, the rotation of the rotor 10 (the rotation of the third rotation shaft 43) is transmitted to the second rotation shaft 42 via the gear pair of the fifth gear 55 and the fourth gear 54, the rotation of the second rotation shaft 42 is transmitted to the first rotation shaft 41 via the gear pair of the second gear 52 and the first gear 51, and the rotation of the first rotation shaft 41 is transmitted to the differential input member 34 via the gear pair of the third gear 53 and the sixth gear 56. In the present embodiment, the fifth gear 55 has a smaller diameter than the fourth gear 54, the second gear 52 has a smaller diameter than the first gear 51, and the third gear 53 has a smaller diameter than the sixth gear 56. Therefore, the rotation of the rotor 10 (the rotation of the third rotation shaft 43) is decelerated and transmitted to the second rotation shaft 42, the rotation of the second rotation shaft 42 is decelerated and transmitted to the first rotation shaft 41, and the rotation of the first rotation shaft 41 is decelerated and transmitted to the differential input member 34.

The case 9 includes the accommodation chamber (R1, R2) that accommodate the rotary electric machine 1 and the power transmission mechanism 3. In the present embodiment, the case 9 includes the first case portion 91, a second case portion 92, and a third case portion 93. The first case portion 91 is formed in a tubular shape having openings on both sides of the axial direction L. The second case portion 92 is fixed to the first case portion 91 so as to close the opening of the first case portion 91 on the axial direction first side L1, and the third case portion 93 is fixed to the first case portion 91 so as to close the opening of the first case portion 91 on the axial direction second side L2. The accommodation chamber (R1, R2) is formed to be surrounded by the first case portion 91, the second case portion 92, and the third case portion 93.

In the present embodiment, the accommodation chamber (R1, R2) is partitioned by a partition wall 95 included in the case 9 into a first accommodation chamber R1 that accommodates the power transmission mechanism 3 and a second accommodation chamber R2 that accommodates the rotary electric machine 1. The first accommodation chamber R1 is disposed on the axial direction first side L1 relative to the second accommodation chamber R2. The partition wall 95 is provided at an intermediate portion of the first case portion 91 in the axial direction L. The partition wall 95 is formed integrally with the first case portion 91 so as to extend inward from an inner wall (inner face) of the first case portion 91. The partition wall 95 has a through hole through which the third rotation shaft 43 (in the present embodiment, also the transmission shaft 25) is inserted. The fifth gear 55 is disposed on the axial direction first side L1 relative to the partition wall 95.

In the present embodiment, the case 9 further includes a third accommodation chamber R3 that accommodates the inverter 19. The case 9 includes a fourth case portion 94 fixed to an outer wall (outer face) of the first case portion 91, and the third accommodation chamber R3 is formed to be surrounded by the first case portion 91 and the fourth case portion 94. Specifically, the outer wall of the first case portion 91 forms a tank-shaped space opened to the outside (for example, upper side V1), and the fourth case portion 94 is fixed to the first case portion 91 so as to close the opening of the tank-shaped space. As described above, in the present embodiment, the accommodation chamber (R1, R2) that accommodates the rotary electric machine 1 and the power transmission mechanism 3 and the accommodation chamber (R3) that accommodates the inverter 19 are integrally formed in one case 9. Here, the accommodation chamber (R1, R2) and the accommodation chamber (R3) are partitioned by one wall. The one wall is formed in the first case portion 91 which is one member (for example, one member manufactured by using an integral molding technique by casting and having a common material).

Oil is stored in the case 9. The oil is oil for cooling and lubricating the rotary electric machine 1 and the power transmission mechanism 3. The heat generating portion is cooled by the oil supplied to the heat generating portion such as the stator 11, and the lubrication target portion is lubricated by the oil supplied to the lubrication target portion such as the gear and the bearing. The oil is stored in a reservoir P (see Figs. 6 and 7) formed in a lower portion (portion on the lower side V2) of the case 9. The oil stored in the reservoir P is supplied to the oil supply target portion such as the heat generating portion and the lubrication target portion, and then returned to the reservoir P. Such circulation of oil is performed by at least one of driving of an oil pump not illustrated and scraping up of oil by a rotation member such as a gear (in the present embodiment, both). The oil ejected from the oil pump is cooled in, for example, an oil cooler that performs heat exchange between the oil and a refrigerant (for example, cooling water), and then supplied to an oil supply target location.

As illustrated in Fig. 7, in the present embodiment, the vehicle drive device 100 includes a strainer ST that filters oil sucked by the oil pump. The strainer ST is accommodated in an accommodation hole 9a in the case 9 (specifically, the first case portion 91). A support member 7 to be described later is disposed outside the opening of the accommodation hole 9a so as to face the strainer ST. Here, the accommodation hole 9a is formed to open on the axial direction first side L1, and the support member 7 is disposed on the axial direction first side L1 relative to the opening. Thus, the support member 7 can restrict the movement of the strainer ST to the outside of the accommodation hole 9a. By providing the support member 7 with a function of preventing the strainer ST from coming off in this manner, a bolt, a bracket, or the like for holding the strainer ST is unnecessary, and the number of parts can be reduced.

The power transmission mechanism 3 includes a plurality of rotation shafts including the first rotation shaft 41, the second rotation shaft 42, the third rotation shaft 43, and the fourth rotation shaft **44** described above. The power transmission mechanism 3 includes gears disposed on the respective rotation shafts. Specifically, as illustrated in Fig. 1, the power transmission mechanism 3 includes the first gear 51 and the third gear 53 disposed on the first rotation shaft 41, the second gear 52 and the fourth gear 54 disposed on the second rotation shaft 42, the fifth gear 55 disposed on the third rotation shaft 43, and the sixth gear 56 disposed on the fourth rotation shaft 44. The gear disposed on the rotation shaft is supported by the rotation shaft. Each of the gears (51 to 56) is supported by the rotation shaft in a state of rotating integrally with the rotation shaft on which each gear is disposed. The power transmission mechanism 3 may include engagement elements such as a clutch and a brake in addition to the rotation shaft and the gear. In the present embodiment, each of the first rotation shaft 41, the second rotation shaft 42, the third rotation shaft 43, and the fourth rotation shaft 44 corresponds to a "rotation shaft", and each of the first gear 51, the second gear 52, the third gear 53, the fourth gear 54, the fifth gear 55, and the sixth gear 56 corresponds to a "gear".

The vehicle drive device 100 includes a plurality of bearings for rotatably supporting each of the plurality of rotation shafts. Specifically, the vehicle drive device 100 includes a first bearing 61 and a third bearing 63 as bearings for supporting the first rotation shaft 41, a second bearing 62 and a fourth bearing 64 as bearings for supporting the second rotation shaft 42, a fifth bearing 65, a sixth bearing 66, and a seventh bearing 67 as bearings for supporting the third rotation shaft 43, and an eighth bearing 68 and a ninth bearing 69 as bearings for supporting the fourth rotation shaft 44. The third bearing 63 is disposed on the axial direction first side L1 relative to the first bearing 61. The fourth bearing 64 is disposed on the axial direction second side L2 relative to the second bearing 62. The seventh bearing 67 is disposed on the axial direction first side L1 relative to the fifth bearing 65, and the sixth bearing 66 is disposed between the fifth bearing 65 and the seventh bearing 67 in the axial direction L. The ninth bearing 69 is disposed on the axial direction first side L1 relative to the eighth bearing 68. In the present embodiment, each of the first bearing 61, the second bearing 62, the seventh bearing 67, and the eighth bearing 68 corresponds to a "bearing".

Two gears of the first gear 51 and the third gear 53 are coupled to a portion of the first rotation shaft 41 between the first bearing 61 and the third bearing 63 in the axial direction L. Here, the "coupling" includes both a case of being unseparably coupled by being integrally formed of the same member, being joined by welding or the like, and a case of being separably coupled by spline coupling or the like. Two gears of the second gear 52 and the fourth gear 54 are coupled to a portion of the second rotation shaft 42 between the second bearing 62 and the fourth bearing 64 in the axial direction L. The rotor 10 is fixed to a portion of the third rotation shaft 43 between the fifth bearing 65 and the sixth bearing 66 in the axial direction L, and the fifth gear 55 is coupled to a portion of the third rotation shaft 43 between the sixth bearing 66 and the seventh bearing 67 in the axial direction L. The sixth gear 56 is coupled to a portion of the fourth rotation shaft 44 between the eighth bearing 68 and the ninth bearing 69 in the axial direction L.

The vehicle drive device 100 includes the support member 7 that supports a plurality of rotation shafts included in the power transmission mechanism 3. In the present embodiment, the support member 7 supports the first rotation shaft 41, the second rotation shaft 42, the third rotation shaft 43, and the fourth rotation shaft 44. Therefore, the support member 7 includes a first support portion 71 that supports the first rotation shaft 41, a second support portion 72 that supports the second rotation shaft 42, a third support portion 73 that supports the third rotation shaft 43, and a fourth support portion (in the present embodiment, doubles as the third support portion 73) that supports the fourth rotation shaft 44. In the present embodiment, the recess, recessed on the axial direction second side L2, formed in the support member 7 constitutes the first support portion 71, the recess recessed, on the axial direction first side L1, formed in the support member 7 constitutes the second support portion 72, and the through hole (through hole through which the transmission shaft 25 is inserted) formed in the support member 7 constitutes the third support portion 73. In the present embodiment, the first support portion 71 corresponds to a "support portion of the first rotation shaft", and the second support portion 72 corresponds to a "support portion of the second rotation shaft".

The support member 7 supports the rotation shaft only by the support member 7 or supports the rotation shaft in cooperation with the case 9. In the present embodiment, the first support portion 71 supports the first rotation shaft 41 in cooperation with the case 9 (specifically, the second case portion 92). The second support portion 72 supports the second rotation shaft 42 in cooperation with the case 9 (specifically, the partition wall 95). The third support portion 73 supports the third rotation shaft 43 in cooperation with the case 9 (specifically, the third case portion 93 and the partition wall 95), and supports the fourth rotation shaft 44 in cooperation with the case 9 (specifically, the second case portion 92).

The support member 7 holds a plurality of bearings. In the present embodiment, the first bearing 61, the second bearing 62, the seventh bearing 67, and the eighth bearing 68 are held by the support member 7. Specifically, the first bearing 61 is held by the first support portion 71, the second bearing 62 is held by the second support portion 72, and the seventh bearing 67 and the eighth bearing 68 are held by the third support portion 73. The seventh bearing 67 is held in a portion of the third support portion 73 on the axial direction second side L2, and the eighth bearing 68 is held in a portion of the third support portion 73 on the axial direction first side L1. On the other hand, the third bearing 63, the fourth bearing 64, the fifth bearing 65, the sixth bearing 66, and the ninth bearing 69 are held by the case 9. Specifically, the third bearing 63 and the ninth bearing 69 are held by the second case portion 92, the fifth bearing 65 is held by the third case portion 93, and the fourth bearing 64 and the sixth bearing 66 are held by the partition wall 95.

As described above, in the present embodiment, the power transmission mechanism 3 includes the first rotation shaft 41 and the second rotation shaft 42, the first gear 51 supported by the first rotation shaft 41, and the second gear 52 supported by the second rotation shaft 42 and meshing with the first gear 51. As illustrated in Fig. 1, the first gear 51 is disposed on the axial direction first side L1 relative to the first support portion 71, and the second gear 52 is disposed on the axial direction second side L2 relative to the second support portion 72. In the present embodiment, the end of the first rotation shaft 41 on the axial direction second side L2 is supported by the first support portion 71 via the first bearing 61, and the end of the second rotation shaft 42 on the axial direction first side L1 is supported by the second support portion 72 via the second bearing 62.

As illustrated in Figs. 1, 2, and 6, the support member 7 has an opening 74 for meshing the first gear 51 and the second gear 52. The first gear 51 and the second gear 52 mesh with each other through the opening 74. With the configuration in which the first gear 51 and the second gear 52 mesh with each other through the opening 74 as described above, the first gear 51 and the second gear 52 can be assembled to the support member 7 from the opposite sides in the axial direction L while the support member 7 is formed of one component. That is, the first rotation shaft 41 supporting the first gear 51 and the first gear 51 is assembled to the support member 7 from the axial direction first side L1, and the second rotation shaft 42 supporting the second gear 52 and the second gear 52 is assembled to the support member 7 from the axial direction second side L2.

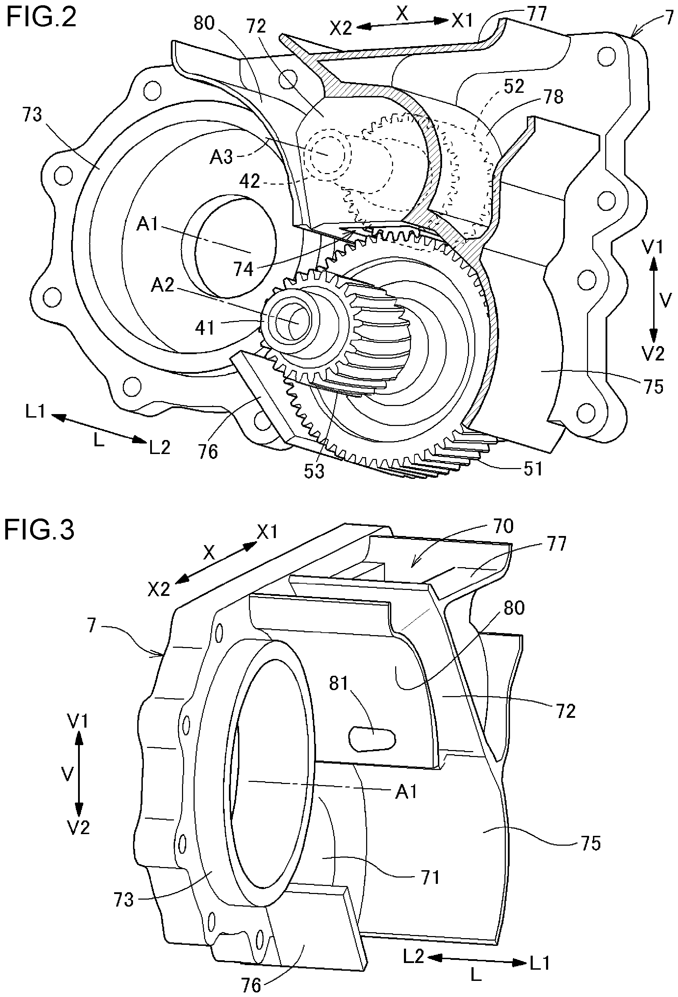

As illustrated in Fig. 1, the second support portion 72 is disposed on the axial direction first side L1 relative to the first support portion 71, and the opening 74 is formed so as to penetrate a portion coupling the first support portion 71 and the second support portion 72 of the support member 7 in the axial direction L in a direction in which are the second axis A2 and the third axis A3 connected (in the present embodiment, the vertical direction V). In the present embodiment, the support member 7 includes a peripheral wall portion that is disposed at a position surrounding the outer periphery of at least one (in the present embodiment, both) of the first gear 51 and the second gear 52 and extends in the axial direction L. Here, "disposed at a position surrounding the outer periphery" means disposed in at least part of the entire area (entire periphery) of the outer periphery. As illustrated in Figs. 2 and 6, in the present embodiment, the peripheral wall portion includes a first wall portion 75 disposed at a position surrounding the outer periphery of the first gear 51 and a third wall portion 78 disposed at a position surrounding the outer periphery of the second gear 52. An opening 74 is formed so as to penetrate a portion, of the peripheral wall portion, where the first gear 51 and the second gear 52 face each other in a direction connecting the second axis A2 and the third axis A3.

The support member 7 is disposed in the accommodation chamber (R1, R2) and is fixed to the case 9. Here, the support member 7 being "disposed in the accommodation chamber (R1, R2)" means that at least part of the support member 7 is disposed inside the accommodation chamber (R1, R2). In the present embodiment, the entire support member 7 is disposed inside the accommodation chamber (R1, R2). The support member 7 is fixed to the inside of the case 9. Here, the support member 7 (specifically, the entire support member 7) is disposed in the first accommodation chamber R1. The support member 7 is fixed to the partition wall 95. Specifically, the support member 7 is fixed to the partition wall 95 by a bolt 79 in a state of being disposed on the axial direction first side L1 relative to the partition wall 95. The first counter gear mechanism 31 and the differential gear mechanism 33 are disposed between the support member 7 and the second case portion 92 in the axial direction L, and the second counter gear mechanism 32 and the fifth gear 55 are disposed between the support member 7 and the partition wall 95 in the axial direction L.

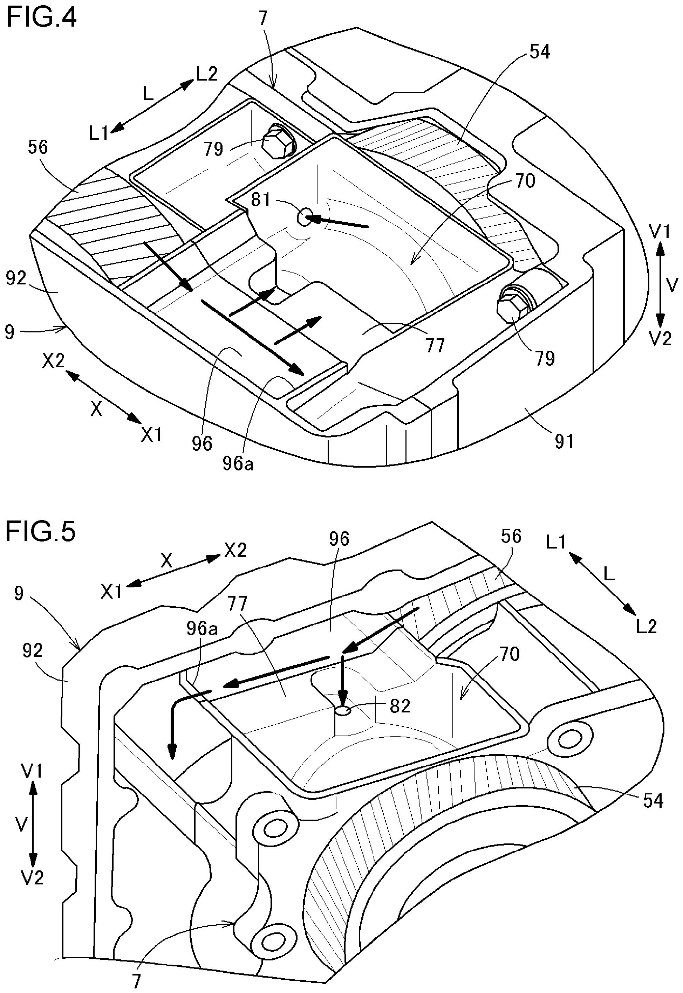

As illustrated in Figs. 4 and 5, the vehicle drive device 100 includes a catch tank 70 that stores oil scraped up by at least any gear included in the power transmission mechanism 3. The catch tank 70 temporarily stores oil, and the oil stored in the catch tank 70 is supplied to an oil supply target portion such as a lubrication target portion. In Figs. 4 and 5, the case 9 is partially broken to show the inside of the case 9 so that the catch tank 70 can be seen. In the present embodiment, the catch tank 70 is configured to store oil scraped up by the sixth gear 56 included in the power transmission mechanism 3. In Figs. 4 and 5, the outline of the flow of the oil scraped up from the reservoir P by the sixth gear 56 when the sixth gear 56 rotates in the rotation direction when the vehicle moves forward is indicated by a thick solid arrow. The catch tank 70 is provided on the upper side V1 relative to the oil reservoir P formed in the lower portion of the case 9. By providing the catch tank 70, it is possible to lower the oil surface in the reservoir P and reduce the stirring resistance of the oil by the rotation member such as the gear.

The catch tank 70 is formed by using the support member 7 without being combined with the case 9. That is, the catch tank 70 is formed only of the support member 7 (in other words, the support member 7 alone), or formed of the support member 7 and a member other than the case 9 (for example, a member attached to the support member 7). In the present embodiment, the catch tank 70 is formed only of the support member 7. As illustrated in Fig. 6, in the present embodiment, the catch tank 70 is formed on the width direction first side X1 relative to the first axis A1. The catch tank 70 is formed so as to overlap at least one (here, both) of the second axis A2 and the third axis A3 when viewed in the vertical direction along vertical direction V. Catch tank 70 is formed to open to the upper side V1 on the upper side V1 relative to any of the first axis A1, the second axis A2, and the third axis A3.

As illustrated in Figs. 3 to 6, the catch tank 70 is formed in a box shape (tank shape) opening to the upper side V1. Since the catch tank 70 formed in this manner is a rib (box-shaped rib), rigidity of the support member 7 supporting the rotation shafts (41 to 44) can be easily secured. In the example shown in Figs. 4 and 5, the catch tank 70 is constituted by one tank, but the catch tank 70 may be constituted by a set of a plurality of tanks partitioned from each other.

As illustrated in Figs. 4 and 5, in the present embodiment, the catch tank 70 is disposed at a position (here, a position shifted to the axial direction second side L2) shifted in the axial direction L with respect to the sixth gear 56. The vehicle drive device 100 has an oil guide structure that guides the oil scraped up by the sixth gear 56 to the catch tank 70. Specifically, the case 9 (specifically, the second case portion 92) includes a supplied face 96 to which the oil scraped up by the sixth gear 56 is supplied. The supplied face 96 is formed so as to face the upper side V1. A damming portion 96a (here, the blocking rib) that restricts the oil from flowing to the width direction first side X1 is provided at an end portion of the supplied face 96 on the width direction first side X1 opposite to the side to which the oil is supplied.

The support member 7 includes a guide face 77 for guiding the oil supplied from the supplied face 96 to the catch tank 70. The guide face 77 is formed so as to face the upper side V1. The support member 7 is fixed to the case 9 so as to be in contact with the second case portion 92 from the axial direction second side L2, and the guide face 77 is disposed so as to be continuous to the supplied face 96 on the axial direction second side L2. As a result, as indicated by a thick solid arrow in Fig. 4, at least part of the oil supplied to the supplied face 96 is supplied to the catch tank 70 through the guide face 77. In this manner, the support member 7 forms an oil guide structure (here, the gutter-shaped oil guide structure formed by the supplied face 96 and the guide face 77) that guides the oil scraped up by the sixth gear 56 to the catch tank 70 in cooperation with the case 9 (specifically, the second case portion 92). Although not described in detail, the oil that has not been dammed by the damming portion 96a (see the thick solid arrow in Fig. 5) is supplied to the third bearing 63, for example.

The support member 7 includes an oil passage for supplying oil from the catch tank 70 to at least one of a plurality of bearings held by the support member 7 and a gear supported by each of a plurality of rotation shafts supported by the support member 7. The gear may be a gear disposed at a position covered by the support member 7 or a gear disposed at a position not covered by the support member 7. The oil passage may be an oil passage formed only of the support member 7 or an oil passage formed across the support member 7 and the case 9.

In the present embodiment, the first bearing 61, the second bearing 62, the seventh bearing 67, and the eighth bearing 68 are held by the support member 7, and the first rotation shaft 41, the second rotation shaft 42, the third rotation shaft 43, and the fourth rotation shaft 44 are supported by the support member 7. Therefore, the oil passage supplies the oil from the catch tank 70 to at least one of the first bearing 61, the second bearing 62, the seventh bearing 67, the eighth bearing 68, the first gear 51 supported by the first rotation shaft 41, the third gear 53 supported by the first rotation shaft 41, the second gear 52 supported by the second rotation shaft 42, the fourth gear 54 supported by the second rotation shaft 42, the fifth gear 55 supported by the third rotation shaft 43, and the sixth gear 56 supported by the fourth rotation shaft 44.

In the present embodiment, the support member 7 includes a first oil passage 81 and a second oil passage 82 as the oil passages described above. As illustrated in Figs. 2, 3, and 6, the support member 7 includes a fourth wall portion 80 that is disposed at a position surrounding the outer periphery of the portion of the fourth rotation shaft 44 on the axial direction second side L2 and extends in the axial direction L. As illustrated in Figs. 3 and 4, the first oil passage 81 is formed by a hole formed in the support member 7 so as to communicate the catch tank 70 with the inner peripheral face of the fourth wall portion 80. The first oil passage 81 supplies the oil in the catch tank 70 to the seventh bearing 67 and the eighth bearing 68 held by the third support portion 73. As illustrated in Fig. 5, the second oil passage 82 is formed by a hole formed in the support member 7 so as to communicate the catch tank 70 with the inner peripheral face of the third wall portion 78. The second oil passage 82 supplies the oil in the catch tank 70 to the second bearing 62 held by the second support portion 72. As described above, the second oil passage 82 supplies the oil in the catch tank 70 to the bearing (second bearing 62) disposed at the third axis A3 which is one, of the second axis A2 and the third axis A3, disposed on the upper side V1. In the present embodiment, each of the first oil passage 81 and the second oil passage 82 corresponds to an "oil passage".

In the present embodiment, the support member 7 has an oil guide structure that guides the oil scraped up and scattered by at least one of the pair of gears (51, 53) included in the first counter gear mechanism 31 to the differential gear mechanism 33. As illustrated in Fig. 6, the differential case configured by the fourth rotation shaft 44 has a case opening 39 which is a through hole penetrating the case, and the oil guided to the differential gear mechanism 33 by the oil guide structure is supplied from the case opening 39 to the inside of the differential gear mechanism 33. The pinion gear 37 and the pair of side gears (35, 36) are lubricated by the oil supplied to the inside of the differential gear mechanism 33. With such an oil guide structure, even when the space on the upper side V1 with respect to the sixth gear 56 is small and it is difficult to supply the oil scraped up by the sixth gear 56 to the differential gear mechanism 33, it is easy to appropriately lubricate the differential gear mechanism 33.

In the present embodiment, as illustrated in Fig. 6, the oil guide structure is configured to guide oil scraped up by the first gear 51 to the differential gear mechanism 33. In Fig. 6, the outline of the flow of the oil scraped up from the reservoir P by the first gear 51 when the first gear 51 rotates in the rotation direction when the vehicle moves forward is indicated by a thick solid arrow. The support member 7 includes the first wall portion 75 for guiding the oil scraped up by the first gear 51 to the differential gear mechanism 33 when the vehicle moves forward. In the present embodiment, the support member 7 further includes a second wall portion 76 for guiding the oil scraped up by the first gear 51 to the differential gear mechanism 33 when the vehicle moves backward. In the present embodiment, each of the first wall portion 75 and the second wall portion 76 corresponds to an "oil guide structure".

As described above, the first wall portion 75 is disposed at a position surrounding the outer periphery of the first gear 51. As shown in Fig. 6, the first wall portion 75 is formed so as to have a portion disposed on the width direction first side X1 with respect to a vertical plane passing through the second axis A2 (a plane extending in the vertical direction V through the second axis A2), and oil scraped up by the first gear 51 when the vehicle moves forward is guided by this portion and scattered toward the width direction second side X2. A region where the first wall portion 75 is not disposed exists on the width direction second side X2 with respect to the vertical plane, and the oil scattered toward the width direction second side X2 as described above is supplied to the differential gear mechanism 33 through this region. The second wall portion 76 is formed so as to have a portion disposed on the width direction second side X2 with respect to the vertical plane and on the lower side V2 with respect to a horizontal plane passing through the second axis A2 (a plane extending in the width direction X through the second axis A2), and oil scraped up by the first gear 51 when the vehicle moves backward is guided by this portion and scattered obliquely upward (specifically, a direction inclined toward the width direction second side X2 toward the upper side V1). A region where the second wall portion 76 is not disposed exists on the width direction second side X2 with respect to the vertical plane and on the upper side V1 with respect to the horizontal plane, and the oil scattered obliquely upward as described above is supplied to the differential gear mechanism 33 through this region.

### [Other embodiments]

(1) In the above embodiment, the configuration in which the entire support member 7 is disposed inside the accommodation chamber (R1, R2) is described as an example. However, the present disclosure is not limited to such a configuration, and only part of the support member 7 may be disposed inside the accommodation chamber (R1, R2). For example, the support member 7 can be fixed to the case 9 in a state of being sandwiched between the first case portion 91 and the second case portion 92 in the axial direction L. In this case, a portion of the support member 7 excluding the portion to be sandwiched between the first case portion 91 and the second case portion 92 in the axial direction L is disposed inside the accommodation chamber (R1, R2).
(2) In the above embodiment, the configuration in which the case 9 includes the third accommodation chamber R3 that accommodates the inverter 19 is described as an example. However, the present disclosure is not limited to such a configuration, and the case 9 may not include the third accommodation chamber R3. In this case, for example, the inverter 19 accommodated in a case different from the case 9 is attached to the outside of the case 9.
(3) In the above embodiment, the configuration in which the catch tank 70 stores the oil scraped up by the sixth gear 56 included in the power transmission mechanism 3 is described as an example. However, the present disclosure is not limited to such a configuration, and the catch tank 70 may store oil scraped up by another gear (for example, first gear 51) included in the power transmission mechanism 3 in addition to the oil scraped up by the sixth gear 56 or instead of the oil scraped up by the sixth gear 56.
(4) In the above embodiment, the configuration in which the support member 7 includes the oil guide structure that guides the oil scraped up and scattered by at least one of the pair of gears (51, 53) included in the first counter gear mechanism 31 to the differential gear mechanism 33 is described as an example. However, the present disclosure is not limited to such a configuration, and the support member 7 may include an oil guide structure that guides the oil scraped up and scattered by at least one of the pair of gears (52 and 54) included in the second counter gear mechanism 32 to the differential gear mechanism 33. In this case, the second counter gear mechanism 32 corresponds to a "counter gear mechanism", the second gear 52 and the fourth gear 54 correspond to a "pair of gears", and the second rotation shaft 42 corresponds to a "coupling shaft as a rotation shaft coupling the pair of gears". In addition, in a case where the oil scraped up by the sixth gear 56 can be supplied to the differential gear mechanism 33, or the like, the support member 7 can be configured not to have the oil guide structure as described above.
(5) In the above embodiment, the configuration is described as an example in which a "first rotation shaft" that supports one gear of the two gears meshing via the opening 74 is the coupling shaft that couples the pair of gears (51, 53) in the first counter gear mechanism 31, and a "second rotation shaft" that supports the other gear is the coupling shaft that couples the pair of gears (52, 54) in the second counter gear mechanism 32. However, the present disclosure is not limited to such a configuration, and any two rotation shafts supporting two gears meshing with each other among a plurality of rotation shafts included in the power transmission mechanism 3 can be set as the "first rotation shaft" and the "second rotation shaft". For example, the rotation shaft that rotates integrally with the rotor 10 and the coupling shaft of the counter gear mechanism may be the "first rotation shaft" and the "second rotation shaft", and the "first gear" that is a gear supported by the rotation shaft that rotates integrally with the rotor 10 and the "second gear" that is a gear supported by the coupling shaft of the counter gear mechanism may mesh with each other through the opening 74.
(6) In the above embodiment, the configuration in which support member 7 has the opening 74 for meshing the first gear 51 and the second gear 52 is described as an example. However, the present disclosure is not limited to such a configuration, and for example, in a case where the support member 7 is formed of two parts, that is, a part in which the first support portion 71 is formed and a part in which the second support portion 72 is formed, such an opening 74 may not be formed in the support member 7.
(7) In the above embodiment, the configuration in which the power transmission mechanism 3 includes the first counter gear mechanism 31 and the second counter gear mechanism 32 is described as an example. However, the present disclosure is not limited to such a configuration, and the power transmission mechanism 3 may not include one or any of the first counter gear mechanism 31 and the second counter gear mechanism 32. Further, the power transmission mechanism 3 may include a planetary gear mechanism (for example, a planetary gear type reduction mechanism) instead of the counter gear mechanism (31, 32) or in addition to the counter gear mechanism (31, 32) in the power transmission path between the rotor 10 and the differential gear mechanism 33.
(8) In the above embodiment, the configuration in which the differential gear mechanism 33 is a bevel gear type differential gear mechanism is described as an example. However, the present disclosure is not limited to such a configuration, and for example, the differential gear mechanism 33 may be a planetary gear type differential gear mechanism. In this case, for example, the member that rotates integrally with the ring gear is the fourth rotation shaft 44 to which the differential input member 34 is coupled, the member that rotates integrally with the sun gear is the first output member 21, and the member that rotates integrally with the carrier is the second output member 22.
(9) In the above embodiment, the configuration in which the power transmission mechanism 3 includes the differential gear mechanism 33 is described as an example. However, the present disclosure is not limited to such a configuration, and the power transmission mechanism 3 may not include the differential gear mechanism 33. In this case, the power transmission mechanism 3 is configured to transmit power between the rotor 10 and one output member (for example, an output shaft coupled to the wheel).
(10) In the above embodiment, the description has been given assuming that the vehicle drive device 100 is used as a drive device for an electric vehicle. However, the present disclosure is not limited to such a configuration, and the technology of the present disclosure can also be applied to, for example, a drive device for a hybrid vehicle.
(11) Note that the configurations disclosed in the above-described embodiments can be applied in combination with the configurations disclosed in other embodiments (including combinations of the embodiments described as other embodiments) as long as there is no contradiction. Regarding other configurations, the embodiments disclosed in the present specification are merely examples in all respects. Therefore, various modifications can be appropriately made without departing from the gist of the present disclosure.

### [Summary of present embodiment]

Hereinafter, a summary of embodiments of the vehicle drive device described above will be described.

The vehicle drive device (100) includes an output member (21, 22) drivingly coupled to the wheel (W1, W2), the rotary electric machine (1) including the rotor (10), the power transmission mechanism (3) that transmits power between the rotor (10) and the output member (21, 22), and the case (9) including the accommodation chamber (R1, R2) that accommodates the rotary electric machine (1) and the power transmission mechanism (3), wherein the power transmission mechanism (3) is the vehicle drive device (100) including a plurality of rotation shafts (41 to 44) and gears (51 to 56) disposed on the respective rotation shafts (41 to 44), wherein the vehicle drive device (100) includes the support member (7) that is disposed in the accommodation chamber (R1, R2) and fixed to the case (9), and that supports a plurality of the rotation shafts (41 to 44) included in the power transmission mechanism (3), and the catch tank (70) that stores oil scraped up by at least any of the gears (51 to 56) included in the power transmission mechanism (3), and wherein the catch tank (70) is formed including the support member (7) without being combined with the case (9).

According to this configuration, the catch tank (70) can be formed including the support member (7) such that a joint portion between the support member (7) and the case (9) does not exist in the catch tank (70). Therefore, leakage of oil from a joint portion between the support member (7) and the case (9) hardly causes a problem, and assembling work of the support member (7) to the case (9) is easily performed as compared with a case where the catch tank (70) is formed by the support member (7) and the case (9).

Here, it is preferable that the support member (7) holds a plurality of bearings (61, 62, 67, 68) for rotatably supporting the plurality of rotation shafts (41 to 44), and the support member (7) includes the oil passage (81, 82) for supplying oil from the catch tank (70) to at least one of the plurality of bearings (61, 62, 67, 68) and the gear (51 to 56) supported by the plurality of rotation shafts (41 to 44).

According to this configuration, the oil stored in the catch tank (70) can be appropriately supplied to a portion requiring lubrication.

Further, it is preferable that the power transmission mechanism (3) includes the first rotation shaft (41) and the second rotation shaft (42) as the plurality of rotation shafts (41, 42), the first gear (51) supported by the first rotation shaft (41), and the second gear (52) supported by the second rotation shaft (42) and meshing with the first gear (51), a direction along the rotation axis (A1) of the rotor (10) is the axial direction (L), one side of the axial direction (L) is the axial direction first side (L1), and the other side of the axial direction (L) is the axial direction second side (L2), the first gear (51) is disposed on the axial direction first side (L1) relative to the support portion (71) of the first rotation shaft (41) in the support member (7), the second gear (52) is disposed on the axial direction second side (L2) relative to the support portion (72) of the second rotation shaft (42) in the support member (7), and the support member (7) has the opening (74) for meshing the first gear (51) and the second gear (52).

According to the present configuration, the two gears (51, 52) meshing with each other can be more appropriately supported by the support member (7) via the rotation shafts (41, 42) that support the respective gears. Here, the first gear (51), which is one of the two gears (51, 52), is disposed on the axial direction first side (L1) relative to the support portion (71) of the first rotation shaft (41) in the support member (7), and the second gear (52), which is the other gear, is disposed on the axial direction second side (L2) relative to the support portion (72) of the second rotation shaft (42) in the support member (7). According to the present configuration, the first gear (51) and the second gear (52) disposed in this manner can appropriately mesh with each other via the opening (74).

Further, it is preferable that the vehicle drive device includes, as the output member (21, 22), the first output member (21) drivingly coupled to the first wheel (W1) and the second output member (22) drivingly coupled to the second wheel (W2), the power transmission mechanism (3) includes the differential gear mechanism (33) and the counter gear mechanism (31) disposed in a power transmission path between the rotor (10) and the differential gear mechanism (33), the differential gear mechanism (33) includes the differential input member (34), and distributes the rotation transmitted to the differential input member (34) to the first output member (21) and the second output member (22), the counter gear mechanism (31) is disposed at the axis (A2) different from any of the rotation axis (A1) of the rotor (10) and the rotation axis (A1) of the differential input member (34), and includes a pair of gears (51, 53) and the coupling shaft (41) serving as the rotation shaft (41) that couples the pair of gears (51, 53), and the support member (7) includes the oil guide structure (75, 76) that guides oil scraped up and scattered by at least one of the pair of gears (51, 53) included in the counter gear mechanism (31) to the differential gear mechanism (33).

According to this configuration, the oil scattered with the rotation of the counter gear mechanism (31) can be supplied to the differential gear mechanism (33) using the support member (7). Therefore, it is possible to reduce the amount of oil in the case (9) while appropriately lubricating the differential gear mechanism (33).

The vehicle drive device according to the present disclosure is only required to be able to achieve at least one of the effects described above.

## Claims

1. A vehicle drive device (100) comprising: an output member (21, 22) drivingly coupled to a wheel (W1, W2); a rotary electric machine (1) including a rotor (10); a power transmission mechanism (3) that transmits power between the rotor (10) and the output member (21, 22); and a case (9) including an accommodation chamber (R1, R2) that accommodates the rotary electric machine (1) and the power transmission mechanism (3), the power transmission mechanism (3) including a plurality of rotation shafts (41 to 44) and gears (51 to 56) disposed on the respective rotation shafts (41 to 44), wherein
the vehicle drive device (100) includes a support member (7) that is disposed in the accommodation chamber (R1, R2), is fixed to the case (9), and holds a plurality of bearings (61, 62, 67, 68) rotatably supporting the plurality of rotation shafts (41 to 44) included in the power transmission mechanism (3), and
a catch tank (70) that stores oil scraped up by at least any of the gears (51 to 56) included in the power transmission mechanism (3), wherein
the catch tank (70) is formed of only the support member (7) or formed of the support member (7) and a member other than the case (9), and wherein
at least part of the support member (7) is disposed inside the case (9).

2. The vehicle drive device (100) according to Claim 1, wherein the support member (7) includes an oil passage for supplying oil from the catch tank (70) to at least one of the plurality of bearings (61, 62, 67, 68) and the gears (51 to 56) supported by the plurality of rotation shafts (41 to 44).

3. The vehicle drive device (100) according to Claim 1 or 2, wherein
the power transmission mechanism (3) includes a first rotation shaft (41) and a second rotation shaft (42) as the plurality of rotation shafts (41 to 44), a first gear (51) supported by the first rotation shaft (41), and a second gear (52) supported by the second rotation shaft (42) and meshing with the first gear (51), wherein
a direction along a rotation axis (A1) of the rotor (10) is defined as an axial direction, one side of the axial direction is defined as an axial direction first side (L1), and the other side of the axial direction is defined as an axial direction second side (L2), wherein
the first gear (51) is disposed on the axial direction first side (L1) relative to a support portion (71) of the first rotation shaft (41) in the support member (7), wherein
the second gear (52) is disposed on the axial direction second side (L2) relative to the support portion (72) of the second rotation shaft (42) in the support member (7), and wherein
the support member (7) has an opening for meshing the first gear (51) and the second gear (52).

4. The vehicle drive device (100) according to Claim 1 or 2, wherein
the vehicle drive device (100) includes, as the output member (21, 22), a first output member (21) drivingly coupled to a first wheel (W1) of the wheels and a second output member (22) drivingly coupled to a second wheel (W2) of the wheels, wherein
the power transmission mechanism (3) includes a differential gear mechanism (33) and a counter gear mechanism (31) disposed in a power transmission path between the rotor (10) and the differential gear mechanism (33), wherein
the differential gear mechanism (33) includes a differential input member (34) and distributes a rotation transmitted to the differential input member (34) to the first output member (21) and the second output member (22), wherein
the counter gear mechanism (31) is disposed at an axis (A2) different from any of a rotation axis (A1) of the rotor (10) and a rotation axis (A1) of the differential input member (34), and includes a pair of gears (51, 52) and a coupling shaft (41) as the rotation shaft (41) coupling the pair of gears (51, 52), and wherein
the support member (7) includes an oil guide structure (75, 76) that guides oil scraped up and scattered by at least one of the pair of gears (51, 52) included in the counter gear mechanism (31) to the differential gear mechanism (33).
